# EUROPEAN PATENT APPLICATION

(11) **EP 4 716 183 A1**
(43) Date of publication of application: **25.03.2026**
(21) Application number: 24822237.4
(22) Date of filing: 04.02.2024
(51) Int. Cl.: H04L 49/9057

(54) **PACKET TRANSMISSION METHOD, COMMUNICATION DEVICE, STORAGE MEDIUM, AND PROGRAM PRODUCT**

(30) Priority: 13.06.2023 CN 202310696667
(71) Applicant: ZTE Corporation, Shenzhen, Guangdong 518057 (CN)
(72) Inventor: HUANG, Guangping, Shenzhen, Guangdong 518057 (CN); TAN, Bin, Shenzhen, Guangdong 518057 (CN)
(74) Representative: Savi, Massimiliano
(86) International application number: PCT/CN2024/075804
(87) International publication number: WO 2024/255277

(57) **Abstract**

Embodiments of the present application provide a packet transmission method, a communication device, a storage medium, and a program product. The method comprises: receiving a computing network delivery policy and a first service packet from a physical client terminal device, wherein the computing network delivery policy is generated on the basis of computing power state information related to a service and network state information, and the first service packet carries a first service identifier used for representing the service type of the first service packet; and when determining, on the basis of the first service identifier, that a virtual client terminal device corresponding to the physical client terminal device is in a multi-cloud resource pool deployment mode, determining a first target cloud resource pool on the basis of the first service identifier and the computing network delivery policy, and forwarding the first service packet to the first target cloud resource pool.

## Description

### CROSS-REFERENCE TO RELATED APPLICATION

This application is filed on the basis of the Chinese patent application No. 2023106966679 filed June 13, 2023, and claims priority of the Chinese patent application, the entire contents of which are incorporated herein by reference.

### TECHNICAL FIELD

The present disclosure relates to the field of communication, and in particular to a method for transmitting packets, a communication device, a storage medium, and a program product.

### BACKGROUND

In related technologies, computing-networking integration has become a recognized industry trend in the fifth generation (5G) communication and post-5G communication. Under a network-centric addressing and routing scheme, the network is configured to select an appropriate computing node from among multiple service instances based on the computing resource status and the prevailing network conditions. In a multi-instance deployment in which compute nodes are distributed across multiple cloud pools, the network utilizes the computing-network status to perform traffic redirection and addressing. In such deployment, the conventional globally unique host address is no longer applicable. In example scenarios where functions of Customer Premise Equipment (CPE) are virtualized and the CPEs are deployed within the cloud-side resource pool, the virtualized CPE may be instantiated across multiple edge cloud resource pools. In such deployments, user access requests encounter the issue related to the on demand traffic redirection among multiple cloud resource pools. Traffic redirection may be performed according to various policies, including but not limited to load balancing, service instance selection, and dynamic resource allocation. However, in such configurations, the Internet Protocol (IP) address obtained by a user terminal resolves to a virtual customer premise equipment (vCPE) instantiated on the cloud side. Accordingly, an L3-based computing-networking integration scheduling and routing mechanism is not suitable for this scenario. Instead, the physical Customer Premise Equipment (pCPE) deployed at the user side and the vCPE deployed at the cloud side maintain a Layer 2 (L2) connection, thereby enabling direct communication without reliance on conventional Layer 3 addressing.

Flexible computing-network traffic redirection across Layer 2 (L2), Layer 3 (L3), and Layer 4 (L4) networking scenarios is critical for cloud-based deployment services, such as virtual Customer Premise Equipment (vCPE). For an example vCPE deployment scenario, according to the prevailing mechanisms, a Layer 2 (L2) access gateway encapsulates a user access request into a designated tunnel and forwards the request to a fixed cloud-side gateway. The forwarding operation is performed in accordance with a virtual local area network (VLAN) identifier, source and destination Media Access Control (MAC) addresses encapsulated in the user packet, and based on a pre-configured policy. The cloud-side gateway then forwards the request to the corresponding vCPE instance for subsequent processing. Therefore, under the prevailing mechanism, it is not possible to achieve flexible scheduling of user access requests among multiple cloud resource pools.

### SUMMARY

Provided are a method for transmitting packets, a communication device, a storage medium, and a program product in various embodiments of the present disclosure. It is possible to achieve flexible scheduling of the user service packets among a plurality of cloud resource pool.

According to a first aspect of the present disclosure, a method for transmitting packets is provided. The method includes: receiving a computing network traffic redirection policy and a first service packet from a physical Customer Premise Equipment (pCPE), wherein, the computing network traffic redirection policy is generated based on computing power status information and network status information related to a service, and the first service packet carries a first service identifier that is indicative of a service type of the first service packet; determining a first target cloud resource pool based on the first service identifier and the computing network traffic redirection policy, in response to a determination that a virtual CPE corresponding to the pCPE is associated with a multi-cloud resource pool deployment mode based on the first service identifier, and forwarding the first service packet to the first target cloud resource pool.

According to a second aspect of the present disclosure, a method for transmitting packets is provided. The method includes sending a first service packet carrying a first service identifier to a target gateway, such that the target gateway, after determining a first target cloud resource pool according to the first service identifier and a received computing network traffic redirection policy, forwards the first service packet to the first target cloud resource pool. The first service identifier is indicative of a service type of the first service packet, and the computing network traffic redirection policy is generated based on computing power status information and network status information related to a service.

According to a third aspect of the present disclosure, a method for transmitting packets is provided. The method includes: acquiring computing power status information and network status information related to a service, and generating a computing network traffic redirection policy based on the computing power status information and the network status information; and sending the computing network traffic redirection policy to a target gateway, such that after the target gateway determines a first target cloud resource pool according to the computing network traffic redirection policy and a first service identifier of a received first service packet, the target gateway forwards the first service packet to the first target cloud resource pool; wherein the first service identifier is indicative of a service type of the first service packet.

According to a fourth aspect of the present disclosure, a communication device is provided. The device includes, at least one processor; and at least one memory configured to store a program which, when executed by the at least one processor, causes the communication device to carry out the method as described in any one of the first, second, or third aspect above.

According to a fifth aspect of the present disclosure, a computer-readable storage medium is provided. The computer-readable storage medium stores a computer program which, when executed by a processor, causes the processor to carry out any one of the methods as described in any one of the first, second, or third aspect above.

According to an embodiment of the present disclosure, a computer program product is provided. The product includes a computer program or a computer instruction stored in a computer-readable storage medium which, when executed by a processor of a computer device, causes the computer device to carry out any one of the methods as described in any one of the first, second, or third aspect above.

Provided are a method for transmitting packets, a communication device, a storage medium, and a computer program product according to various embodiments of the present disclosure. According to an embodiment, a computing network traffic redirection policy and a first service packet are received from a pCPE. The computing network traffic redirection policy is generated based on the computing power status information and network status information related to a service. The first service packet carries a first service identifier that is indicative of a service type of the first service packet. Then, a deployment mode of a vCPE corresponding to the pCPE is determined based on the first service identifier. A first target cloud resource pool is then determined based on the first service identifier and the computing network traffic redirection policy, in response to a determination that the deployment mode is a multi-cloud resource pool deployment mode. The first service packet is then forwarded to the first target cloud resource pool. For the multi-cloud resource pool deployment mode, according to various embodiments of the present disclosure, it is possible to select the corresponding first target cloud resource pool to redirect the first service packet according to the service type, computing power status and network status corresponding to the first service packet. Thereby, the user service packet can be flexibly scheduled among multi-cloud resource pools.

### BRIEF DESCRIPTION OF DRAWINGS

FIG. 1 depicts a schematic diagram showing traffic redirection architecture in a computing network based on L2 service identifier according to an embodiment of the present disclosure;
FIG. 2 depicts a schematic diagram showing traffic redirection architecture in a computing network based on L3 service identifier according to an embodiment of the present disclosure;
FIG. 3 depicts a schematic diagram showing traffic redirection architecture in a computing network based on L4 service identifier according to an embodiment of the present disclosure;
FIG. 4 depicts a flowchart showing a method for transmitting packets, performed by a target gateway side according to an embodiment of the present disclosure;
FIG. 5 depicts a flowchart showing the process of the determination of the access policy included in the method for transmitting packets, according to an embodiment of the present disclosure;
FIG. 6 depicts a flowchart showing an implementation of operation S420 included in the method for transmitting packets according to an embodiment of the present disclosure;
FIG. 7 depicts a flowchart showing the generation of a flow affinity table included in the method for transmitting packets according to an embodiment of the present disclosure;
FIG. 8 depicts a flowchart showing the transmission of the subsequent service packets according to the flow affinity table included in the method according to an embodiment of the present disclosure;
FIG. 9 depicts a flowchart showing a method for transmitting packets performed by a pCPE side according to an embodiment of the present disclosure;
FIG. 10 depicts a flowchart showing a method for transmitting packets performed by a computing network control system side according to an embodiment of the present disclosure;
FIG. 11 depicts a flowchart showing access gateway network traffic redirection based on L2 service identifier according to an embodiment of the present disclosure;
FIG. 12 depicts a flowchart showing edge gateway computing network traffic redirection based on L3 service identifier according to an embodiment of the present disclosure;
FIG. 13 depicts a flowchart showing service gateway computing network traffic redirection based on L4 service identifier according to an embodiment of the present disclosure;
FIG. 14 depicts a schematic diagram showing a device for transmitting packets according to an embodiment of the present disclosure;
FIG. 15 is a schematic diagram showing a device for transmitting packets according to an embodiment of the present disclosure;
FIG. 16 is a schematic diagram showing a device for transmitting packets according to an embodiment of the present disclosure; and
FIG. 17 depicts a schematic diagram showing a communication device according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It should be noted that although the devices are shown with individual functional modules in the schematic diagram and the logical sequences are shown in the flow chart, in some cases, the devices can have different modules than those shown and the operations can be executed in a different order than those shown. It should be noted that the terms "first" and "second", if used in the description, the claims and the drawings are intended to distinguish similar objects, and do not necessarily imply any specific order or sequence.

In the embodiments of the present disclosure, the terms "further", "exemplary" or "optional" are used as examples, illustrations or explanations, and should not be interpreted as being more preferred or advantageous than other embodiments or designs. The use of words such as "further", "exemplary" or "optional" is intended to present related concepts in a concrete way.

In some cases, computing-networking integration has become a recognized industry trend in the fifth generation (5G) communication and post-5G communication. Under a network-centric addressing and routing scheme, the network is configured to select an appropriate computing node from among multiple service instances based on the computing resource status and the prevailing network conditions. In a multi-instance deployment in which compute nodes are distributed across multiple cloud pools, the network utilizes the computing-network status to perform traffic redirection and addressing. In such a deployment, the conventional globally unique host address is no longer applicable. In example scenarios where functions of Customer Premise Equipment (CPE) are virtualized and the CPEs are deployed within the cloud-side resource pool, the virtualized CPE may be instantiated across multiple edge cloud resource pools. In such deployments, user access requests encounter the issue related to the on-demand traffic redirection among multiple cloud resource pools. Traffic redirection may be performed according to various policies, including but not limited to load balancing, service instance selection, and dynamic resource allocation. However, in such configurations, the Internet Protocol (IP) address obtained by a user terminal resolves to a virtual customer premise equipment (vCPE) instantiated on the cloud side. Accordingly, an L3-based computing-networking integration scheduling and routing mechanism is not suitable for this scenario. Instead, the physical Customer Premise Equipment (pCPE) deployed at the user side and the vCPE deployed at the cloud side maintain a Layer 2 (L2) connection, thereby enabling direct communication without reliance on conventional Layer 3 addressing.

Flexible computing-network traffic redirection across Layer 2 (L2), Layer 3 (L3), and Layer 4 (L4) networking scenarios is critical for cloud-based deployment services, such as virtual Customer Premise Equipment (vCPE). For an example vCPE deployment scenario, according to the prevailing mechanisms, a Layer 2 (L2) access gateway encapsulates a user access request into a designated tunnel and forwards the request to a fixed cloud-side gateway. The forwarding operation is performed in accordance with a virtual LAN (VLAN) identifier, source and destination Media Access Control (MAC) addresses encapsulated in the user packet, and based on a pre-configured policy. The cloud-side gateway then forwards the request to the corresponding vCPE instance for subsequent processing. Therefore, under the prevailing mechanism, it is not possible to achieve flexible scheduling of user access requests among multiple cloud resource pools.

In view of the foregoing, the present disclosure provides a method for transmitting packets, a communication device, a storage medium, and a program product in various embodiments of the present disclosure. It is possible to achieve flexible scheduling of the user service packets among a plurality of cloud resource pools.

Several embodiments of the present disclosure will be further illustrated with reference to the drawings.

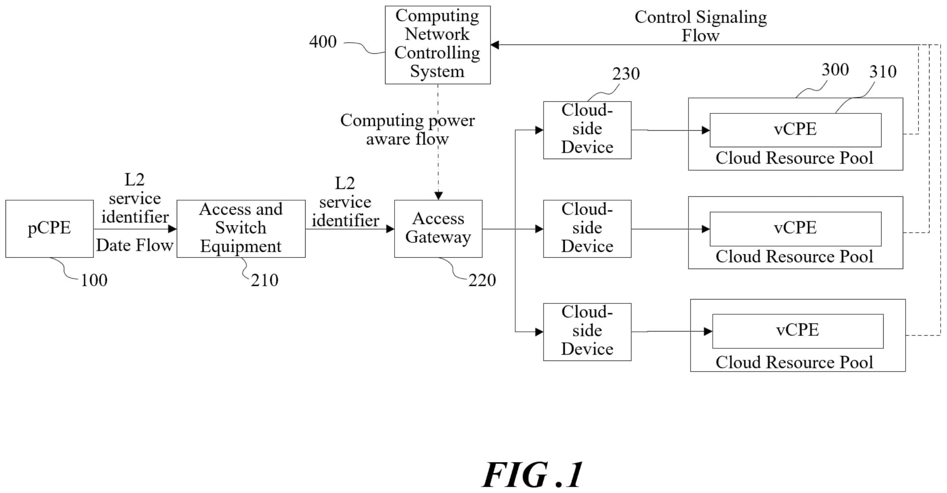

FIG. 1 depicts a schematic diagram showing traffic redirection architecture in a computing network based on L2 service identifier according to an embodiment of the present disclosure. As shown in FIG. 1, the architecture includes, without limitation, a physical Customer Premise Equipment 100 (pCPE), an access switching equipment 210, an access gateway 220, a cloud-side equipment 230 (cloud Provider Edge (PE)), a cloud resource pool 300, and a computing network control system 400. The cloud resource pool 300 is provided with a virtual Customer Premise Equipment 310 (vCPE). In a non-limiting implementation, the pCPE is connected to the cloud resource pool 300 through the access switching equipment 210, access gateway 220, and cloud-side equipment 230 in the sequence as shown in FIG. 1. In addition, computing network control system 400 is communicatively connected at an ingress side thereof to the cloud resource pool 300, and is communicatively connected at an egress side thereof to the access gateway 220.

In the embodiment as shown in FIG. 1, the cloud resource pool 300 generates a control signaling flow that flows to the computing network control system 400. Further, the computing network control system 400 generates, based on the control signaling flow, a computing-aware flow that flows to the access gateway 220. In addition, the pCPE generates a data flow carrying an L2 service identifier, and the data flow flows through the access switching device 210, the access gateway 220, the cloud-side device 230, and the cloud resource pool 300 in the sequence as shown in FIG. 1.

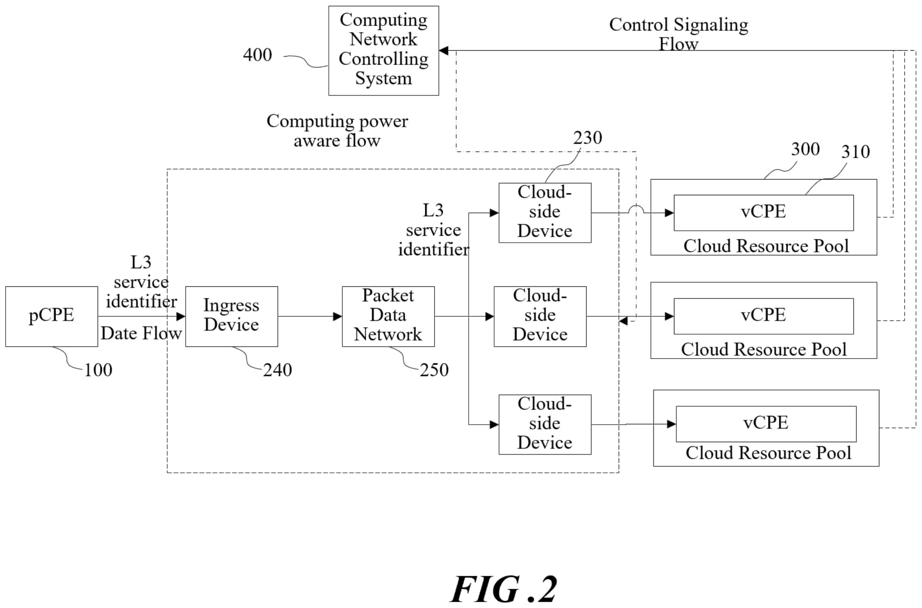

FIG. 2 depicts a schematic diagram showing traffic redirection architecture in a computing network based on L3 service identifier according to an embodiment of the present disclosure. As shown in FIG. 2, the architecture includes, without limitation, a physical Customer Premise Equipment 100 (pCPE), a packet bearer network, a cloud resource pool 300, and a computing network control system 400. The packet bearer network includes, without limitation, an ingress device 240 (ingress PE), a packet data network 250, and a cloud side device 230 (cloud PE). The cloud resource pool 300 is provided with a virtual Customer Premise Equipment 310 (vCPE). In a non-limiting implementation, the pCPE is communicatively connected to the cloud resource pool 300 through the ingress device 240, the packet data network 250, and the cloud-side equipment 230 in the sequence as shown in FIG. 2. In addition, the computing network control system 400 is communicatively connected at an ingress side thereof to the cloud resource pool 300, and is communicatively connected at an egress side thereof to the packet bearer network.

In the embodiment as shown in FIG. 2, the cloud resource pool 300 generates a control signaling flow that flows to the computing network control system 400. Further, the computing network control system 400 generates, based on the control signaling flow, a computing-aware flow that flows to the packet bearer network. In addition, the pCPE generates a data flow carrying an L3 service identifier, and the data flow flows through the ingress device 240, the packet data network 250, the cloud-side equipment 230, and the cloud resource pool 300 in the sequence as shown in FIG. 2.

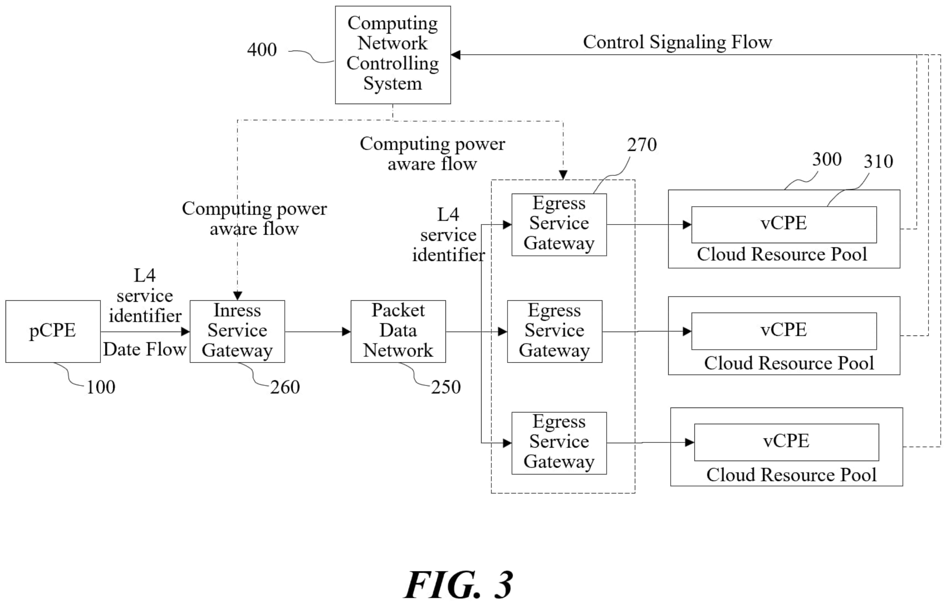

FIG. 3 depicts a schematic diagram showing a traffic redirection architecture in a computing network based on an L4 service identifier according to an embodiment of the present disclosure. As shown in FIG. 3, the architecture includes, without limitation, a physical Customer Premise Equipment 100 (pCPE), an ingress service gateway 260, a packet data network 250, an egress service gateway 270, a cloud resource pool 300, and a computing network control system 400. The cloud resource pool 300 is provided with a virtual Customer Premise Equipment 310 (vCPE). In a non-limiting implementation, the pCPE is communicatively connected to the cloud resource pool 300 through the ingress service gateway 260, the packet data network 250, and the egress service gateway 270 in the sequence as shown in FIG. 3. In addition, the computing network control system 400 is communicatively connected at an ingress side thereof to the cloud resource pool 300, and is communicatively connected at an egress side thereof to the ingress service gateway 260 and the egress service gateway 270.

In the embodiment as shown in FIG. 3, the cloud resource pool 300 generates a control signaling flow that flows to the computing network control system 400. Further, the computing network control system 400 generates, based on the control signaling flow, a computing-aware flow that flows to the packet bearer network. In addition, the pCPE generates a data flow carrying an L4 service identifier, and the data flow flows through the ingress service gateway 260, the packet data network 250, and the egress service gateway 270, and the cloud resource pool 300 in the sequence as shown in FIG. 3.

In an embodiment, the service identifiers discussed above are globally unique identifiers that each identifies a specific computing network service, which is independent of the semantics of existing network protocol identifiers (such as MAC, QinQ, IP address, port number, etc.), and which is not related to location where a service is deployed and affiliation of the service, but is only related to the service type. That is, one service identifier can be associated with multiple equivalent service instances deployed in or across clouds.

In an embodiment, with respect to Layer 2 (L2) network protocol service identifiers, when multiple instances of home terminal virtual functions (such as vCPE) are deployed across cloud pools, the introduction of multiple service nodes for traffic redirection in the L2 access network necessitates a unified service identifier at the forwarding plane. The unified service identifier represents a given service type and is independent of the physical location or organizational affiliation of the host providing the service. In the prevailing encapsulation identifiers of L2 Ethernet, according to the embodiments of the present disclosure, it is possible to reuse and extend the semantics of the following three L2 identifiers as service identifiers and indexes for traffic redirection in a computing network, as described below.

The first implementation relates to the extension of QinQ (e.g., PVLAN+SVLAN) by extending the QinQ semantics of PVLAN, SVLAN, or a combination of both to indicate specific service types for multi-instance cross-cloud deployments.

The second implementation relates to the extension of the destination MAC address (broadcast address) to indicate the specific service type for multi-instance cross-cloud deployments.

The third implementation relates to the extension of the upper-layer protocol types to indicate the specific service type for multi-instance cross-cloud deployments.

In an embodiment, the L3 network protocol service identifier includes two types: a reused IPv6 fixed field and an extended field for separate encapsulation, as discussed below.

The first implementation relates to the reuse of IPv6 fixed fields as the service identifiers with their service semantics extended. These fields may include, without limitations, (i) source address suffix field reused as a service identifier with the service semantics extended; (ii) destination address suffix field reused as a service identifier with the service semantics extended; and (iii) flow label field reused as a service identifier with the service semantics extended.

The second implementation relates to the separate encapsulation of the service identifier within an IPv6 extension field. For example, the service identifier can be encapsulated separately in the extension headers like the Hop By Hop Header (HBH), Destination Option Header (DOH), or Segment Routing Header (SRH).

In a non-limiting embodiment, the L4 network protocol service identifier may be set according to the following two implementations.

The first implementation relates to the reuse of the source port number field as the service identifier and the extension of the service semantics.

The second implementation relates to the separate definition and encapsulation of the service identifier in a User Datagram Protocol (UDP) payload.

In an embodiment, the computing-aware process of the cloud resource pool where the service is deployed, which is implemented over a network, is described as follows.

The computing-aware process of the cloud resource pool where the service is deployed, which is implemented over a network, is shown with respect to FIGS. 1 to 3. Under the L2 service identifier mechanism, the L2 access gateway interfaces with the computing network control system and collects information about the computing power status of the cloud resource pool where the service is deployed. Under the L3 service identifier mechanism, the edge node of the packet bearer network (e.g., the ingress PE and cloud PE) interfaces with the computing network control system and collects the information about the computing power status of the cloud resource pool where the service is deployed. Under the L4 service identifier mechanism, the L4 service gateway interfaces with the computing network control system and collects information about the computing power status of the cloud resource pool where the service is deployed.

In a non-limiting embodiment, under the L2 service identifier mechanism, vCPE is deployed at the cloud side. By offloading functionality to the cloud, the physical customer premise equipment (pCPE) at the home side may be simplified, thereby reducing terminal cost while maintaining terminal access capability. As a terminal access function component, the CPE exhibits improved scalability and flexibility in comparison with conventional implementations. As cloud resources are increasingly deployed in lower-tier regions, the cloud-side deployment of virtual customer premise equipment (vCPE) exhibits a distributed characteristic. In such configurations, vCPE service resources distributed across multiple cloud resource pools are interconnected and integrated into an integrated resource pool. The integrated resource pool provides high-quality, always-on CPE access services capable of supporting a massive number of users with improved scalability and reliability. To achieve the foregoing interconnected computing-network functionality, the access network is configured to collect information about the computing resources within the cloud resource pool where the virtual customer premise equipment (vCPE) is deployed.

In the embodiment as shown in FIG. 1, the cloud resource pool advertises dynamic data of computing resources related to vCPE to the access network computing network control system through a computing-aware interface. The data includes, without limitations, the number of available vCPE instances, overall load, instance load, overall remaining session capacity, instance remaining session capacity, instance quality status parameters, or the like. The instance quality status parameters include, without limitations, latency/delay, packet loss, jitter, or the like. Additionally, the dynamic data under the L3 and L4 service identifier mechanisms, are identical to those described with respect to the L2 service identifier mechanism.

The procedure of redirection of service requests based on service identifiers and multi-cloud resource pool computing power scheduling policy according to an embodiment, is described as follows.

As shown in FIG. 1, in a user access request process, the pCPE encapsulates the user's private Virtual Local Area Network (VLAN) tag (i.e., PVLAN tag, which is the tag of the PVLAN via which the user accesses the network), source and destination Media Access Control (MAC) addresses within a user packet. An access switching device encapsulates the operator's public network VLAN tag, i.e., SVLAN tag, within the user packet to indicate the user's public network VLAN tag. The packets with the stack of the two tags, i.e., the PVLAN tag and the SVLAN tag, is the so-called QinQ tagged packets. QinQ tag is a unique tag for a user in an end-to-end network and can be used to identify a user, a user group, and a service type.

Subsequently, the access gateway determines the service type (such as vCPE) accessed by the pCPE based on the L2 service identifier, and performs the access node selection, in conjunction with the vCPE computing power status information obtained above, for multiple vCPE instances in the multi-cloud resource pool. In a non-limiting embodiment, the access policy of the access gateway can be determined by the computing network control system based on the computing power status of multiple vCPE instances and the corresponding network link status through fusion and optimization. However, the computing power status and network link status are decoupled. As a result, the access policy of the access gateway can be determined based solely on the computing power status or the network link status. According to an embodiment, the access policy may include computing power status prioritized, network link status prioritized, computing-network status fusion prioritized, or computing power load balancing. Typically, the access gateways initiate connections to the vCPE of the cloud resource pool based on tunneling technologies such as Segment Routing v6 (SRv6) or Virtual Extensible Local Area Network (VxLAN).

In an embodiment, a flow affinity mechanism is provided for multi-cloud resource pool traffic redirection scenarios, which is described as follows.

In one embodiment, under the L2 service identifier mechanism, after the access gateway redirects the access request of the same pCPE based on computing power awareness, it is forwarded to a specific vCPE in a specific cloud resource pool, such as the vCPE in the third cloud resource pool shown in FIG. 1. Thereafter, the user's session state will be maintained in that vCPE. The access gateway should ensure that subsequent uplink packet flows from the pCPE are forwarded to that specific vCPE, rather than a new vCPE instance selected based on the computing power status, which would otherwise cause errors in user service logic and data. An access gateway needs to maintain the flow affinity table to guide the consistent forwarding of packets from specific users. The flow affinity table forms a combined flow index (traffic redirection index) through source and destination identifiers. In an embodiment, the source identifier is the QinQ and source MAC address in the user packet, and the destination identifier is the selected vCPE identifier or the identifier of the resource pool where the selected vCPE is deployed, such as the cloud PE address. It should be noted that if the cloud resource pool involves multiple equivalent vCPE instances, the cloud PE needs to maintain the flow affinity state of the selected instance.

In an embodiment, the access gateway may perform consistent forwarding of pCPE uplink packet flows based on a flow affinity table indexed by QinQ, source MAC address, and cloud pool identifier.

In addition, under the L3 and L4 service identifier mechanisms, the edge node of the packet bearer network and the L4 service gateway also need to maintain the flow affinity table as discussed above, with the table entry parameters different. In a non-limiting embodiment, under the L3 and L4 service identifier mechanisms, a service flow is typically identified by a unique 5-tuple (e.g., source and destination addresses, source and destination port numbers, and upper-layer protocol number), and a flow affinity table is generated on this basis.

The technical schemes set forth in various embodiments of the present disclosure are applicable to various communication technologies, such as microwave communication, optical communication, millimeter-wave communication, or the like. It is not intended to limit the technologies or equipment where the technical schemes set forth in various embodiments of the present disclosure are deployed.

Several embodiments for the method for transmitting packets are provided, based on the computing-network traffic redirection architecture discussed above. In some embodiments, the method is performed by a target gateway side.

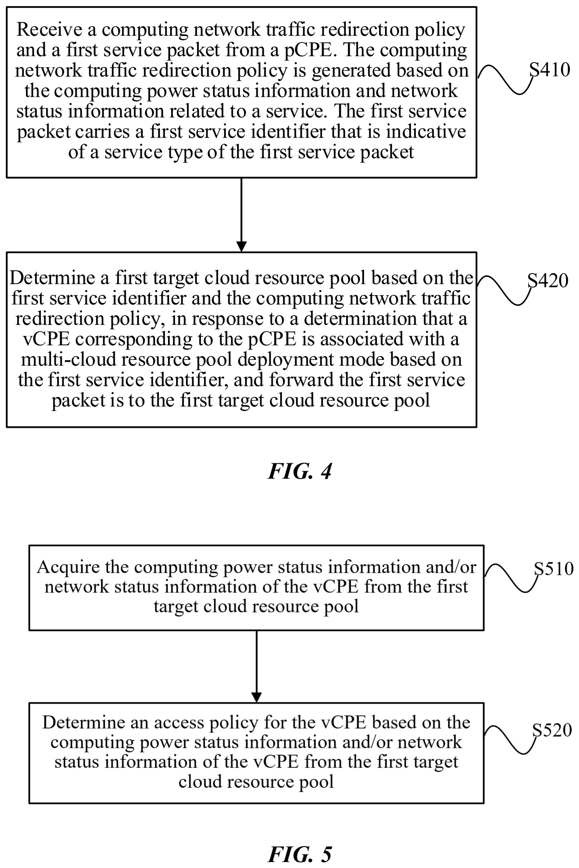

FIG. 4 depicts a flowchart showing a method for transmitting packets, performed by a target gateway side according to an embodiment of the present disclosure. As shown in FIG. 4, the method may include, without limitation, operations S410 and S420 as below.

At operation S410, a computing network traffic redirection policy and a first service packet are received from a pCPE. The computing network traffic redirection policy is generated based on the computing power status information and network status information related to a service. The first service packet carries a first service identifier that is indicative of a service type of the first service packet.

At operation S420, a first target cloud resource pool is determined based on the first service identifier and the computing network traffic redirection policy, in response to a determination that a vCPE corresponding to the pCPE is associated with a multi-cloud resource pool deployment mode based on the first service identifier, and the first service packet is forwarded to the first target cloud resource pool.

In an implementation, the computing network control system receives computing power status information and network status information related to a service, generates a computing network traffic redirection policy, and sends the computing network traffic redirection policy to the target gateway. Then, when receiving from the pCPE, a first service packet that carries a first service identifier indicative of the service type of the first service packet, the target gateway determines the deployment mode associated with the vCPE corresponding to the pCPE based on the first service identifier. Subsequently, if it is determined that the deployment mode is multi-cloud resource pool deployment mode, the target gateway determines the first target cloud resource pool based on the first service identifier and the computing network traffic redirection policy, and forwards the first service packet to the first target cloud resource pool.

For the multi-cloud resource pool deployment mode, according to various embodiments of the present disclosure, it is possible to select the corresponding first target cloud resource pool to redirect the first service packet according to the service type, computing power status and network status corresponding to the first service packet. Thereby, the user service packet can be flexibly scheduled among multi-cloud resource pools.

In addition, the generation of the first service identifier differs depending on the networking.

In an embodiment related to L2 networking, the first service identifier is generated by semantic extension of the VLAN identifier, the destination MAC address, or the upper-layer protocol type information. The VLAN identifier includes at least one of, a QinQ identifier, a private VLAN identifier, or a public VLAN identifier.

In an embodiment related to L3 networking, the first service identifier is generated by semantic extension of the IPv6 fixed fields, or the first service identifier is encapsulated in the IPv6 extended fields.

In an embodiment related to L4 networking, the first service identifier is generated by semantic expansion of the source port number field, or the first service identifier is encapsulated in the protocol payload of a user packet.

In an embodiment, the computing power status information may include at least one of: the number of available instances for a vCPE, overall load data, instance load data, overall remaining session capacity, instance remaining session capacity, and instance quality status parameters.

FIG. 5 depicts a flowchart showing the process of the determination of the access policy included in the method for transmitting packets, according to an embodiment of the present disclosure. As shown in FIG. 5, after the first target cloud resource pool is determined, the method may further include, without limitation, operations S510 and S520.

At operation S510, the computing power status information and/or network status information of the vCPE are acquired from the first target cloud resource pool.

At operation S520, an access policy is determined for the vCPE based on the computing power status information and/or the network status information of the vCPE from the first target cloud resource pool.

According to an embodiment, corresponding access policies are set according to the following three non-limiting cases.

According to a first case, the access policy for the vCPE is determined based on the computing power status information of the vCPE from the first target cloud resource pool.

According to a second case, the access policy for the vCPE is determined based on the network status information of the vCPE from the first target cloud resource pool.

According to a third case, the access policy for the vCPE is determined based on the computing power status information and the network status information of the vCPE from the first target cloud resource pool.

According to an embodiment, the access policy may include one of: a computing power status prioritized policy, network link status prioritized policy, a computing-network status fusion prioritized policy, or a computing power load balancing policy.

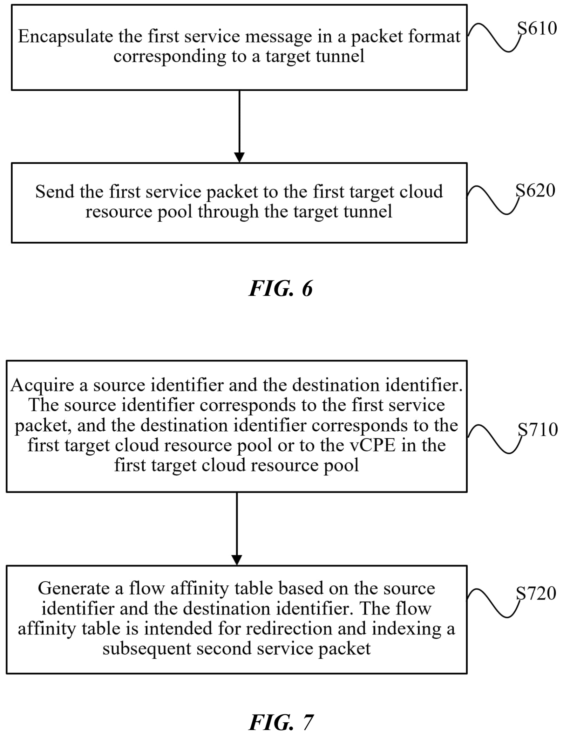

FIG. 6 depicts a flowchart showing an implementation of operation S420 included in the method for transmitting packets according to an embodiment of the present disclosure. As shown in FIG. 6, the method may include, without limitation, operations S610 and S620.

At operation S610, the first service packet is encapsulated in a packet format corresponding to a target tunnel.

At operation S620, the first service packet is sent to the first target cloud resource pool through the target tunnel.

In an embodiment, the target gateway may initiate tunnel encapsulation and forward the first service packet to the first target cloud resource pool. The tunnel encapsulation may be incompliance with SRv6, VxLAN, or equivalent protocols.

FIG. 7 depicts a flowchart showing the generation of a flow affinity table included in the method for transmitting packets according to an embodiment of the present disclosure. As shown in FIG. 7, after the first target cloud resource pool is determined according to the first service identifier and the computing network traffic redirection policy at operation S420, the method may further include, without limitation, operations S710 and S720.

At operation S710, a source identifier and the destination identifier are acquired. The source identifier corresponds to the first service packet, and the destination identifier corresponds to the first target cloud resource pool or to the vCPE in the first target cloud resource pool.

At operation S720, a flow affinity table is generated based on the source identifier and the destination identifier. The flow affinity table is intended for redirection and indexing a subsequent second service packet.

In one embodiment, under the L2 service identifier mechanism, after the access gateway redirects the access request of a pCPE based on computing power awareness, it is forwarded to a specific vCPE in a specific cloud resource pool, such as the vCPE in the third cloud resource pool shown in FIG. 1. Thereafter, the user's session state will be maintained in that vCPE. The access gateway should ensure that subsequent uplink packet flows from the pCPE are forwarded to that specific vCPE, rather than a new vCPE instance selected based on the computing power status, which would otherwise cause errors in user service logic and data. The access gateway needs to maintain the flow affinity table to guide the consistent forwarding of packets from specific users. The flow affinity table forms a combined flow index through source and destination identifiers.

In an embodiment, the source identifier is the QinQ and source MAC address in the user packet, and the destination identifier is the selected vCPE identifier or the identifier of the resource pool where the selected vCPE is deployed, such as the cloud PE address. It should be noted that if the cloud resource pool involves multiple equivalent vCPE instances, the cloud PE needs to maintain the flow affinity state of the selected instance.

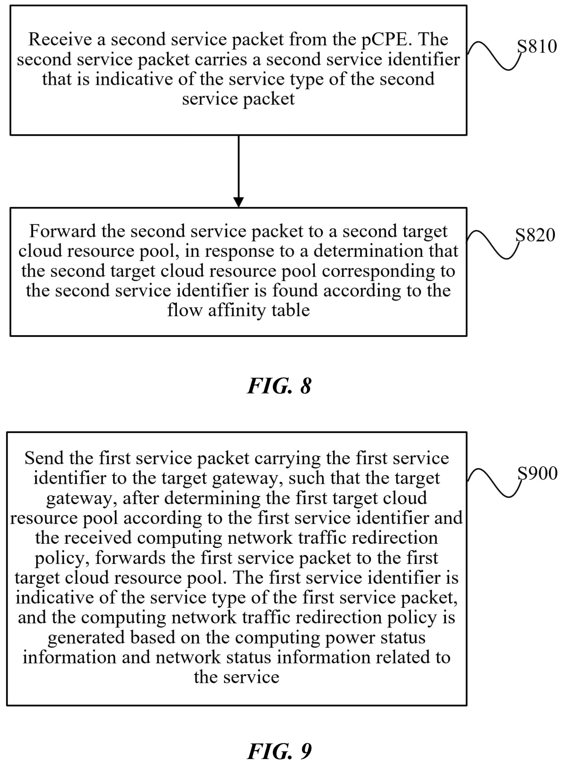

FIG. 8 depicts a flowchart showing the transmission of the subsequent service packets according to the flow affinity table included in the method according to an embodiment of the present disclosure. As shown in FIG. 8, after the flow affinity table is generated according to the source identifier and the destination identifier at operation S720, the method may further include, without limitation, operations S810 and S820.

At operation S810, a second service packet is received from the pCPE. The second service packet carries a second service identifier that is indicative of the service type of the second service packet.

At operation S820, the second service packet is forwarded to a second target cloud resource pool, in response to a determination that the second target cloud resource pool corresponding to the second service identifier is found according to the flow affinity table.

In one embodiment, when receiving a second service packet from the pCPE, the target gateway looks up in the flow affinity table for the second service identifier carried in the second service packet. If a match is found in the table, the packet is forwarded to the selected vCPE cloud pool according to the established tunneling mechanism. This ensures that subsequent uplink packet flows from the pCPE are forwarded to that specific vCPE, rather than selecting a new vCPE instance based on the computing power status, which would otherwise cause errors in user service logic and data.

Under Layer 2 networking, the source identifier includes at least one of a private virtual local area network identifier, a public virtual local area network identifier, or a source MAC address.

Under Layer 3 or Layer 4 networking, the source identifier includes at least one of: a source address, a destination address, a source port number, a destination port number, or an upper-layer protocol number.

Several embodiments for the method for transmitting packets are provided, based on the computing-network traffic redirection architecture discussed above. In some embodiments, the method is performed by a pCPE side.

FIG. 9 depicts a flowchart showing a method for transmitting packets performed by a pCPE side according to an embodiment of the present disclosure. As shown in FIG. 9, the method may include, without limitation, operation S900.

At operation S900, the first service packet carrying the first service identifier is sent to the target gateway, such that the target gateway determines the first target cloud resource pool according to the first service identifier and the received computing network traffic redirection policy, and forwards the first service packet to the first target cloud resource pool. The first service identifier is indicative of the service type of the first service packet, and the computing network traffic redirection policy is generated based on the computing power status information and the network status information related to the service.

In an implementation, the computing network control system receives computing power status information and network status information related to a service, generates a computing network traffic redirection policy, and sends the computing network traffic redirection policy to the target gateway. Then, when receiving from the pCPE, a first service packet that carries a first service identifier indicative of the service type of the first service packet, the target gateway determines the deployment mode associated with the vCPE corresponding to the pCPE based on the first service identifier. Subsequently, if it is determined that the deployment mode is multi-cloud resource pool deployment mode, the target gateway determines the first target cloud resource pool based on the first service identifier and the computing network traffic redirection policy, and forwards the first service packet to the first target cloud resource pool.

For the multi-cloud resource pool deployment mode, according to various embodiments of the present disclosure, it is possible to select the corresponding first target cloud resource pool to redirect the first service packet according to the service type, computing power status and network status corresponding to the first service packet. Thereby, the user service packet can be flexibly scheduled among multi-cloud resource pools.

Since the method for transmitting packets performed by the pCPE according to an embodiment corresponds to the method for transmitting packets performed by the target gateway in the foregoing embodiments, the implementation and technical effects of the method for transmitting packets performed by the pCPE may be understood with reference to the implementation and technical effects of the method for transmitting packets performed by the target gateway as described in any of the foregoing embodiments.

In addition, the generation of the first service identifier differs depending on the networking.

In an embodiment related to L2 networking, the first service identifier is generated by semantic extension of the VLAN identifier, the destination MAC address, or the upper-layer protocol type information. The VLAN identifier includes at least one of, a QinQ identifier, a private VLAN identifier, or a public VLAN identifier.

In an embodiment related to L3 networking, the first service identifier is generated by semantic extension of the IPv6 fixed fields, or the first service identifier is encapsulated in the IPv6 extended fields.

In an embodiment related to L4 networking, the first service identifier is generated by semantic expansion of the source port number field, or the first service identifier is encapsulated in the protocol payload of a user packet.

In an embodiment, the computing power status information may include at least one of: the number of available instances for a vCPE, overall load data, instance load data, overall remaining session capacity, instance remaining session capacity, and instance quality status parameters.

Several embodiments for the method for transmitting packets are provided, based on the computing-network traffic redirection architecture discussed above. In some embodiments, the method is performed by a computing network control system side.

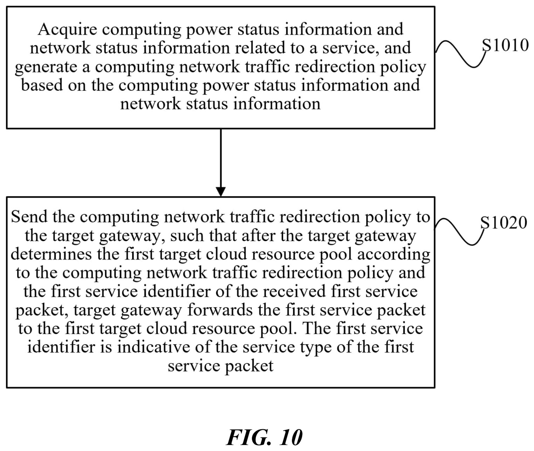

FIG. 10 depicts a flowchart showing a method for transmitting packets performed by a computing network control system side according to an embodiment of the present disclosure. As shown in FIG. 10, the method may include, without limitation, operations S1010 and S1020.

At operation S1010, computing power status information and network status information related to a service are acquired, and a computing network traffic redirection policy is generated based on the computing power status information and the network status information.

At operation S1020, the computing network traffic redirection policy is sent to the target gateway, such that after the target gateway determines the first target cloud resource pool according to the computing network traffic redirection policy and the first service identifier of the received first service packet, and forwards the first service packet to the first target cloud resource pool. The first service identifier is indicative of the service type of the first service packet.

In an implementation, the computing network control system receives computing power status information and network status information related to a service, generates a computing network traffic redirection policy, and sends the computing network traffic redirection policy to the target gateway. Then, when receiving from the pCPE, a first service packet that carries a first service identifier indicative of the service type of the first service packet, the target gateway determines the deployment mode associated with the vCPE corresponding to the pCPE based on the first service identifier. Subsequently, if it is determined that the deployment mode is multi-cloud resource pool deployment mode, the target gateway determines the first target cloud resource pool based on the first service identifier and the computing network traffic redirection policy, and forwards the first service packet to the first target cloud resource pool.

For the multi-cloud resource pool deployment mode, according to various embodiments of the present disclosure, it is possible to select the corresponding first target cloud resource pool to redirect the first service packet according to the service type, computing power status and network status corresponding to the first service packet. Thereby, the user service packet can be flexibly scheduled among multi-cloud resource pools.

Since the method for transmitting packets performed by the computing-network control system side described in this embodiment corresponds to the method for transmitting packets performed by the target gateway side or the pCPE side described in the foregoing embodiments, the implementation and technical effects of the method for transmitting packets performed by the computing-network control system side may be understood with reference to the implementation and technical effects of the method for transmitting packets performed by the target gateway or by pCPE side as described in any of the foregoing embodiments.

In addition, the generation of the first service identifier differs depending on the networking.

In an embodiment related to L2 networking, the first service identifier is generated by semantic extension of the VLAN identifier, the destination MAC address, or the upper-layer protocol type information. The VLAN identifier includes at least one of, a QinQ identifier, a private VLAN identifier, or a public VLAN identifier.

In an embodiment related to L3 networking, the first service identifier is generated by semantic extension of the IPv6 fixed fields, or the first service identifier is encapsulated in the IPv6 extended fields.

In an embodiment related to L4 networking, the first service identifier is generated by semantic expansion of the source port number field, or the first service identifier is encapsulated in the protocol payload of a user packet.

In an embodiment, the computing power status information may include at least one of: the number of available instances for a vCPE, overall load data, instance load data, overall remaining session capacity, instance remaining session capacity, and instance quality status parameters.

Several embodiments for the overall procedure of the method for transmitting packets are provided, based on the computing-network traffic redirection architecture discussed above.

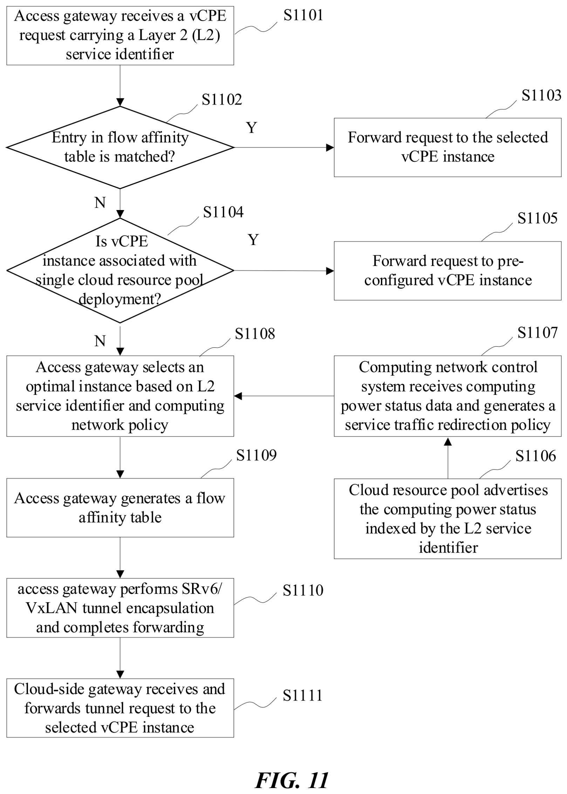

FIG. 11 depicts a flowchart showing access gateway computing-network traffic redirection based on L2 service identifier according to an embodiment of the present disclosure. As shown in FIG. 11, the access gateway computing-network traffic redirection method based on L2 service identifier includes, without limitation, operations S1101 to S1111.

At operation S1101, the access gateway receives a vCPE request carrying a Layer 2 (L2) service identifier.

At operation S1102, a determination is made as to whether an entry in the flow affinity table is matched. If yes, the procedure proceeds to operation S1103; otherwise, the procedure proceeds to operation S1104.

At operation S1103, the request is forwarded to the selected vCPE instance.

At operation S1104, a determination is made as to whether the vCPE instance is associated with a single cloud resource pool deployment. If yes, the procedure proceeds to operation S1105; otherwise, the procedure proceeds to operation S1108.

At operation S1105, the request is forwarded to the pre-configured vCPE instance.

At operation S1106, the cloud resource pool advertises the computing power status indexed by the L2 service identifier.

At operation S1107, the computing network control system receives computing power status data and generates a service traffic redirection policy.

At operation S1108, the access gateway performs instance selection based on the L2 service identifier and computing network policy.

At operation S1109, the access gateway generates a flow affinity table.

At operation S1110, the access gateway performs SRv6/VxLAN tunnel encapsulation and completes forwarding.

At operation S1111, the cloud-side gateway receives and forwards the tunnel request to the selected vCPE instance.

In an embodiment, as shown in FIGS. 1 and 11, in the L2 access network, the access gateway in FIG. 1 is a general access forwarding node. The overall procedure is as follows.
1. When receiving an access request packet from the pCPE, the access gateway looks up the L2 service identifier in the flow affinity table. If a match is found, the gateway forwards the packet to the vCPE cloud resource pool according to an established tunnel forwarding policy.
2. If the access gateway fails to find a match in the flow affinity table, the access gateway determines whether the corresponding vCPE is associated with multi-cloud resource pools based on the L2 service identifier. If it is determined that the vCPE is associated with a single-cloud resource pool, the access gateway forwards the user request packet to the corresponding vCPE cloud resource pool according to the pre-configured information.
3. If it is determined that the corresponding vCPE is associated with a multi-cloud resource pool deployment based on the L2 service identifier, the access gateway queries the corresponding computing power traffic redirection policy table based on the L2 service identifier to select a specific vCPE instance. The cloud resource pool where the service is located advertises the computing power status to the computing network control system according to a specific protocol interface. The computing network control system generates a computing network traffic redirection policy indexed by the L2 service identifier and sends the policy to the access gateway.
4. The access gateway generates a flow affinity table based on the L2 service identifier and the selected vCPE cloud resource pool identifier (e.g., the cloud PE address).
5. The access gateway initiates SRv6 or VxLAN tunnel encapsulation and forwards user packets to the cloud resource pool where the selected vCPE is deployed.
6. The cloud-side gateway receives the request packet forwarded by the access gateway, terminates the tunnel encapsulation, and forwards the request packet to the selected vCPE instance.
7. The procedure ends.

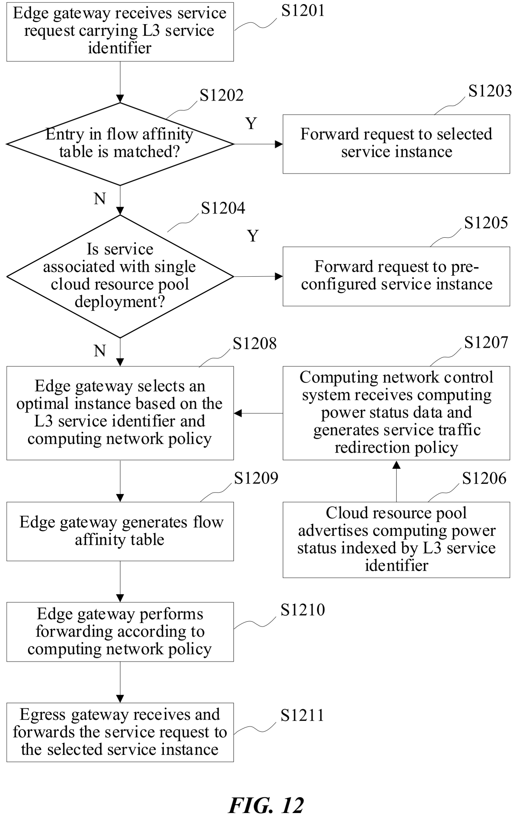

FIG. 12 depicts a flowchart showing edge gateway computing network traffic redirection based on L3 service identifier according to an embodiment of the present disclosure. As shown in FIG. 12, the access gateway computing network traffic redirection method based on L3 service identifier includes, without limitation, operations S1201 to S1211.

At operation S1201, an edge gateway receives a service request carrying an L3 service identifier.

At operation S1202, a determination is made as to whether an entry in the flow affinity table is matched. If yes, the procedure proceeds to operation S1203; otherwise, the procedure proceeds to operation S1204.

At operation S1203, the request is forwarded to the selected service instance.

At operation S1204, a determination is made as to whether the service is associated with a single cloud resource pool deployment. If yes, the procedure proceeds to operation S1205; otherwise, the procedure proceeds to operation S1208.

At operation S1205, the request is forwarded to the pre-configured service instance.

At operation S1206, the cloud resource pool advertises the computing power status indexed by the L3 service identifier.

At operation S1207, the computing network control system receives computing power status data and generates a service traffic redirection policy.

At operation S1208, the edge gateway selects an optimal instance based on the L3 service identifier and computing network policy.

At operation S1209, the edge gateway generates a flow affinity table.

At operation S1210, the edge gateway performs forwarding according to the computing network policy.

At operation S1211, an egress gateway receives and forwards the service request to the selected service instance.

In an embodiment, as shown in FIGS. 2 and 12, under the L3 service identifier mechanism, the ingress-side device in FIG. 2 is an edge gateway in the packet bearer network. In this case, the procedure is as follows.
1. When receiving a service request packet from the terminal device, the edge gateway looks up the L3 service identifier in the flow affinity table. If a match is found, the gateway forwards the packet to the cloud resource pool where the selected service is located according to an established policy.
2. If the edge gateway fails to find a match in the flow affinity table, the edge gateway determines whether the corresponding service is associated with a multi-cloud resource pool deployment based on the L3 service identifier. If it is determined that the service is associated with a single-cloud resource pool deployment, the gateway forwards the service request packet to the corresponding service cloud resource pool according to the pre-configured information.
3. If it is determined that the corresponding service is associated with a multi-cloud resource pool deployment based on the L3 service identifier, the edge gateway queries the corresponding computing network traffic redirection policy table based on the L3 service identifier to select a specific service instance. The cloud resource pool where the service is located advertises the computing power status to the computing network control system according to a specific protocol interface. The computing network control system generates a computing network traffic redirection policy indexed by the L3 service identifier and sends the policy to the edge gateway. In addition, the computing network control system may be a centralized control system or a distributed control system.
4. The edge gateway generates a flow affinity table based on the L3 service identifier and the selected service cloud resource pool identifier (e.g., the cloud PE address).
5. The edge gateway forwards the service request packet to the cloud resource pool where the selected service instance is located, according to the computing network traffic redirection policy generated by the computing network control system.
6. The egress gateway receives the service request packet forwarded by the edge gateway and forwards the request packet to the selected service instance.
7. The procedure ends.

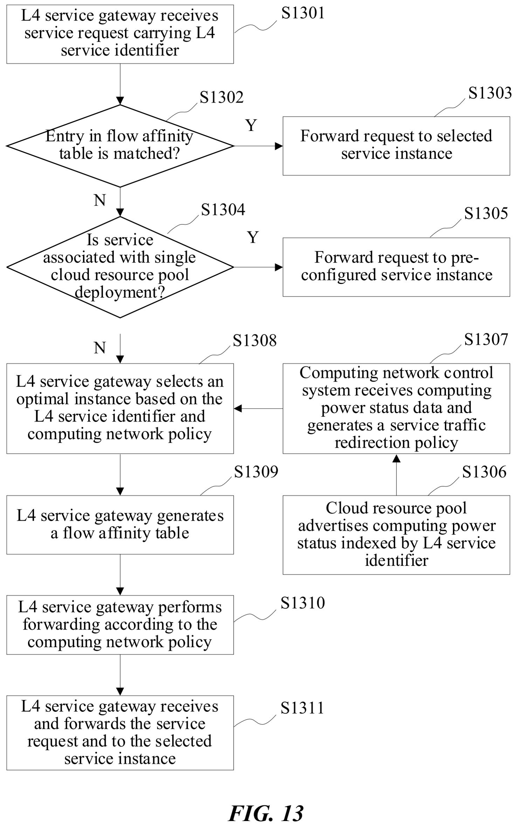

FIG. 13 depicts a flowchart showing service gateway computing network traffic redirection based on L4 service identifier according to an embodiment of the present disclosure. As shown in FIG. 13, the access gateway computing network traffic redirection method based on L4 service identifier includes, without limitation, operations S1301 to S1311.

At operation S1301, a Layer 4 (L4) service gateway receives a service request carrying an L4 service identifier.

At operation S1302, a determination is made as to whether an entry in the flow affinity table is matched. If yes, the procedure proceeds to operation S1303; otherwise, the procedure proceeds to operation S1304.

At operation S1303, the request is forwarded to the selected service instance.

At operation S1304, a determination is made as to whether the service is associated with a single cloud resource pool deployment. If yes, the procedure proceeds to operation S1305; otherwise, the procedure proceeds to operation S1308.

At operation S1305, the request is forwarded to the pre-configured service instance.

At operation S1306, the cloud resource pool advertises the computing power status indexed by the L4 service identifier.

At operation S1307, the computing network control system receives computing power status data and generates a service traffic redirection policy.

At operation S1308, the L4 service gateway selects an optimal instance based on the L4 service identifier and computing network policy.

At operation S1309, the L4 service gateway generates a flow affinity table.

At operation S1310, the L4 service gateway performs forwarding according to the computing network policy.

At operation S 1311, the L4 service gateway receives and forwards the service request to the selected service instance.

In an embodiment, as shown in FIGS. 3 and 13, under the L4 service identifier mechanism, the L4 service gateway in FIG. 3 is a UDP/TCP-based overlay gateway, typically deployed at an edge node close to a terminal device and close to the cloud resource pool. The procedure is as follows.
1. When receiving a service request packet from the terminal device, the L4 service gateway looks up the L4 service identifier in the flow affinity table. If a match is found, the L4 service gateway forwards the packet to the cloud resource pool where the selected service is located according to an established policy.
2. If the L4 service gateway fails to find a match in the flow affinity table, the gateway determines whether the corresponding service is associated with a multi-cloud resource pool deployment based on the L4 service identifier. If it is determined that the service is associated with a single-cloud resource pool deployment, the gateway forwards the service request packet to the corresponding service cloud resource pool according to the pre-configured information.
3. If it is determined that the corresponding service is associated with a multi-cloud resource pool deployment based on the L4 service identifier, the L4 service gateway queries the corresponding computing network traffic redirection policy table based on the L4 service identifier to select a specific service instance.

The cloud resource pool where the service is deployed advertises the computing power status to the computing network control system according to a specific protocol interface. The computing network control system generates a computing network traffic redirection policy indexed by the L4 service identifier and sends the policy to the L4 service gateway.
4. The L4 service gateway generates a flow affinity table based on the L4 service identifier and the selected service cloud resource pool identifier (e.g., the cloud PE address).
5. The L4 service gateway forwards the service request packet to the cloud resource pool where the selected service instance is located, according to the computing network traffic redirection policy generated by the computing network control system.
6. The L4 service gateway receives the service request packet forwarded by the L4 service gateway at the end side and forwards the request packet to the selected service instance.
7. The procedure ends.

Based on the above-described method for transmitting packets, several embodiments regarding a device for transmitting packets, a communication device, a computer-readable storage medium and a computer program product are provided below.

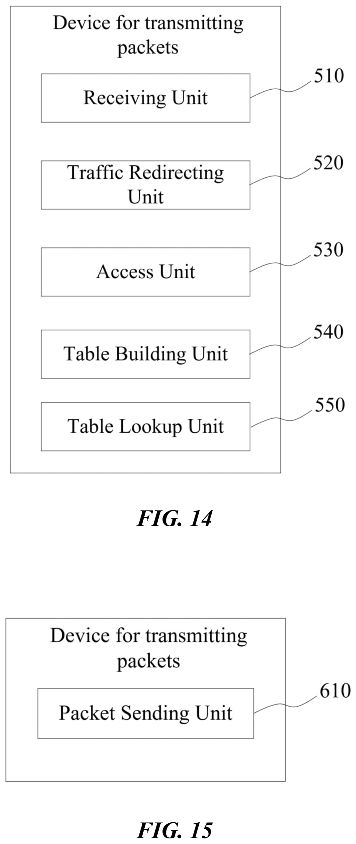

FIG. 14 depicts a schematic diagram showing a device for transmitting packets according to an embodiment of the present disclosure. As shown in FIG. 14, the device includes, without limitation, a receiving unit 510 and a traffic redirecting unit 520.

The receiving unit 510 is configured to receive a computing network traffic redirection policy and a first service packet from a pCPE. The computing network traffic redirection policy is generated based on the computing power status information and network status information related to a service. The first service packet carries a first service identifier that is indicative of the service type of the first service packet. The traffic redirecting unit 520 is configured to determine a first target cloud resource pool based on the first service identifier and the computing network traffic redirection policy, in response to a determination that a vCPE corresponding to the pCPE is associated with a multi-cloud resource pool mode based on the first service identifier, and to forward the first service packet to the first target cloud resource pool.

In a non-limiting embodiment, the device further includes an access unit 530, which is configured to determine an access policy for the vCPE based on the computing power status information and/or network status information of the vCPE from the first target cloud resource pool. In an embodiment, the access policy includes one of: a computing power status prioritized policy, a network link status prioritized policy, a computing-network status fusion prioritized policy, or a computing power load balancing policy.

In an embodiment, the traffic redirecting unit 520 is further configured to encapsulate the first service packet in a packet format corresponding to the target tunnel, and send the first service packet to the first target cloud resource pool through the target tunnel.

In a non-limiting embodiment, the device further includes a table building unit 540, which is configured to acquire a source identifier and a destination identifier and generates a flow affinity table according to the source identifier and the destination identifier. The source identifier corresponds to the first service packet, and the destination identifier corresponds to the first target cloud resource pool or to the vCPE in the first target cloud resource pool. The flow affinity table is intended for redirection and indexing a subsequent second service packet.

In a non-limiting embodiment, the device further includes, a table lookup unit 550, which is configured to receive from the pCPE a second service packet that carries a second service identifier that is indicative of the service type of the second service packet; and to forward the second service packet to a second target cloud resource pool, in response to a determination that the second target cloud resource pool corresponding to the second service identifier is found according to the flow affinity table.

Since the device for transmitting packets according to an embodiment corresponds to the method for transmitting packets performed by the target gateway side in the foregoing embodiments, the implementation and technical effects of the device for transmitting packets may be understood with reference to the implementation and technical effects of the method for transmitting packets performed by the target gateway side as described in any of the foregoing embodiments.

FIG. 15 is a schematic diagram showing a device for transmitting packets according to an embodiment of the present disclosure. As shown in FIG. 15, the device includes, without limitation, a packet sending unit 610.

The packet sending unit 610 is configured to send the first service packet carrying the first service identifier to the target gateway, such that the target gateway, after determining the first target cloud resource pool according to the first service identifier and the received computing network traffic redirection policy, forwards the first service packet to the first target cloud resource pool. The first service identifier is indicative of the service type of the first service packet, and the computing network traffic redirection policy is generated based on the computing power status information and network status information related to the service.

Since the device for transmitting packets according to an embodiment corresponds to the method for transmitting packets performed by the pCPE side in the foregoing embodiments, the implementation and technical effects of the device for transmitting packets may be understood with reference to the implementation and technical effects of the method for transmitting packets performed by the pCPE side as described in any of the foregoing embodiments.

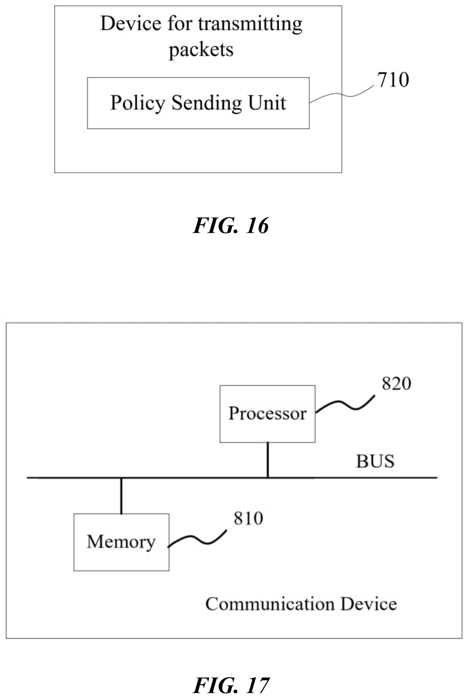

FIG. 16 is a schematic diagram showing a device for transmitting packets according to an embodiment of the present disclosure. As shown in FIG. 16, the device includes, without limitation, a policy sending unit 710.

The policy sending unit 710 is configured to acquire computing power status information and network status information related to a service, generate a computing network traffic redirection policy based on the computing power status information and network status information; and send the computing network traffic redirection policy to the target gateway, such that after the target gateway determines the first target cloud resource pool according to the computing network traffic redirection policy and the first service identifier of the received first service packet, target gateway forwards the first service packet to the first target cloud resource pool. The first service identifier is indicative of the service type of the first service packet.

Since the device for transmitting packets according to an embodiment corresponds to the method for transmitting packets performed by the computing network control system side in the foregoing embodiments, the implementation and technical effects of the device for transmitting packets may be understood with reference to the implementation and technical effects of the method for transmitting packets performed by the computing network control system side as described in any of the foregoing embodiments.

FIG. 17 depicts a schematic diagram showing a communication device according to an embodiment of the present disclosure. As shown in FIG. 17, the communication device includes a memory 810, and a processor 820. One or more memory 820 and/or one or more processors 820 may be provided, while FIG. 17 shows one memory 810, and one processor 820 by way of an example. The memory 810, and the processor 820 in the device may be connected via a bus as shown by way of an example in FIG. 17, or the like.

As a computer-readable storage medium, the memory 810 can be configured to store software programs, computer-executable programs, and modules, such as program instructions/modules corresponding to the method described in any one of the embodiments of the present disclosure. The processor 820 carries out the method for transmitting packets described in any one of the embodiments above by execution of the software programs, instructions and modules stored in the memory 810.

The memory 810 may include a program storage section and a data storage section, in which the program storage section may store an operating system and application programs for performing at least one operation. In addition, the memory 810 can include a high-speed random access memory and a nonvolatile memory, such as at least one disk memory device, a flash memory device, or other nonvolatile solid-state memory devices. In some implementations, the memory 810 may include memories remotely located relative to the processor 820, and these remote memories may be connected to the apparatus through a network. Examples of the above networks include, but are not limited to, the Internet, intranet, local area network, mobile communication network, and combinations thereof.

According to an embodiment of the present disclosure, a computer-readable storage medium is provided. The computer-readable storage medium stores a computer-executable instruction which, when executed by a processor, causes the processor to carry out the method as described in any one of the embodiments above.

According to an embodiment of the present disclosure, a computer program product is provided. The computer program product includes a computer program or a computer instruction stored in a computer-readable storage medium which, when executed by a processor of a computer device, causes the computer device to carry out any one of the methods as described above.

The system architecture and application scenarios described in an embodiment of the present disclosure are intended for a better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It shall be appreciated by a person having ordinary skills in the art that all or some of the steps, functional modules/units in the methods, systems, and devices disclosed above can be implemented as software, firmware, hardware, and their appropriate combinations.

In the hardware implementation, the division between functional modules/ units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor, or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

The terms "component", "module" and "system" used in this description are intended to refer to computer-related entities, hardware, firmware, a combination of hardware and software, software, or software in execution. For example, a component can be, but is not limited to, a process running by a processor, a processor, an object, an executable file, a thread of execution, a program, or a computer. By way of illustration, both an application running on a computing device and the computing device can be components. One or more components can reside in a process or thread of execution, and components can be located on one computer or distributed between two or more computers. In addition, these components can be executed from various computer-readable media having various data structures stored thereon. Components can communicate through local or remote processes, for example, according to signals with one or more data packets (for example, data from two components interacting with another component between a local system, a distributed system or a network, for example, the Internet interacting with other systems through signals).

## Claims

1. A method for transmitting packets, comprising:
receiving a computing network traffic redirection policy and a first service packet from a physical Customer Premise Equipment (pCPE), wherein, the computing network traffic redirection policy is generated based on computing power status information and network status information related to a service, and the first service packet carries a first service identifier that is indicative of a service type of the first service packet;
determining a first target cloud resource pool based on the first service identifier and the computing network traffic redirection policy, in response to a determination that a virtual CPE corresponding to the pCPE is associated with a multi-cloud resource pool deployment mode based on the first service identifier, and
forwarding the first service packet to the first target cloud resource pool.

2. The method according to claim 1, wherein,
under Layer 2 networking, the first service identifier is generated by semantic extension of one of a virtual local area network (VLAN) identifier, a destination Media Access Control (MAC) address, or an upper-layer protocol type information; and
wherein, the VLAN identifier comprises at least one of, a QinQ identifier, a private VLAN identifier, or a public VLAN identifier.

3. The method according to claim 1, wherein, under Layer 3 networking, the first service identifier is generated by semantic extension of an Internet Protocol version 6 (IPv6) fixed field, or the first service identifier is encapsulated in an IPv6 extended field.

4. The method according to claim 1, wherein, under Layer 4 networking, the first service identifier is generated by semantic expansion of a source port number field, or the first service identifier is encapsulated in a protocol payload of a user packet.

5. The method according to claim 1, wherein, the computing power status information comprises at least one of: a number of available instances for the vCPE, overall load data, instance load data, overall remaining session capacity, instance remaining session capacity, or an instance quality status parameter.

6. The method according to claim 1, wherein, after determining the first target cloud resource pool based on the first service identifier and the computing network traffic redirection policy, the method further comprises:
determining an access policy for the vCPE based on at least one of, the computing power status information, or the network status information of the vCPE from the first target cloud resource pool; and the access policy comprises one of: a computing power status prioritized policy, a network link status prioritized policy, a computing-network status fusion prioritized policy, or a computing power load balancing policy.

7. The method according to claim 1, wherein, forwarding the first service packet to the first target cloud resource pool comprises:
encapsulating the first service packet in a packet format corresponding to a target tunnel; and
sending the first service packet to the first target cloud resource pool through the target tunnel.

8. The method according to claim 1, wherein, after determining the first target cloud resource pool based on the first service identifier and the computing network traffic redirection policy, the method further comprises:
acquiring a source identifier and a destination identifier, wherein the source identifier corresponds to the first service packet, and the destination identifier corresponds to the first target cloud resource pool or to the vCPE in the first target cloud resource pool; and
generating a flow affinity table based on the source identifier and the destination identifier, wherein the flow affinity table is intended for redirection and indexing a subsequent second service packet.

9. The method according to claim 8, wherein, after generating the flow affinity table based on the source identifier and the destination identifier, the method further comprises:
receiving a second service packet from the pCPE, wherein the second service packet carries a second service identifier that is indicative of a service type of the second service packet; and
forwarding the second service packet to a second target cloud resource pool, in response to a determination that the second target cloud resource pool corresponding to the second service identifier is found according to the flow affinity table.

10. The method according to claim 8, wherein,
under Layer 2 networking, the source identifier comprises at least one of a private virtual local area network (VLAN) identifier, a public VLAN identifier, or a source MAC address;
or,
under Layer 3 or Layer 4 networking, the source identifier comprises at least one of: a source address, a destination address, a source port number, a destination port number, or an upper-layer protocol number.

11. A method for transmitting packets, comprising:
sending a first service packet carrying a first service identifier to a target gateway, such that the target gateway determines a first target cloud resource pool according to the first service identifier and a received computing network traffic redirection policy, and forwards the first service packet to the first target cloud resource pool;
wherein, the first service identifier is indicative of a service type of the first service packet, and the computing network traffic redirection policy is generated based on computing power status information and network status information related to a service.

12. The method according to claim 11, wherein,
under Layer 2 networking, the first service identifier is generated by semantic extension of one of a virtual local area network (VLAN) identifier, a destination Media Access Control (MAC) address, or an upper-layer protocol type information; and
wherein, the VLAN identifier comprises at least one of, a QinQ identifier, a private VLAN identifier, or a public VLAN identifier.

13. The method according to claim 11, wherein, under Layer 3 networking, the first service identifier is generated by semantic extension of an Internet Protocol version 6 (IPv6) fixed field, or the first service identifier is encapsulated in an IPv6 extended field.

14. The method according to claim 11, wherein, under Layer 4 networking, the first service identifier is generated by semantic expansion of a source port number field, or the first service identifier is encapsulated in a protocol payload of a user packet.

15. The method according to claim 11, wherein, the computing power status information comprises at least one of: a number of available instances for a virtual Customer Premise Equipment (vCPE), overall load data, instance load data, overall remaining session capacity, instance remaining session capacity, or an instance quality status parameter.

16. A method for transmitting packets, comprising:
acquiring computing power status information and network status information related to a service, and generating a computing network traffic redirection policy based on the computing power status information and the network status information; and
sending the computing network traffic redirection policy to a target gateway, such that after the target gateway determines a first target cloud resource pool according to the computing network traffic redirection policy and a first service identifier of a received first service packet, the target gateway forwards the first service packet to the first target cloud resource pool; wherein the first service identifier is indicative of a service type of the first service packet.

17. The method according to claim 16, wherein, under Layer 2 networking, the first service identifier is generated by semantic extension of one of a virtual local area network (VLAN) identifier, a destination Media Access Control (MAC) address, or an upper-layer protocol type information; wherein, the VLAN identifier comprises at least one of, a QinQ identifier, a private VLAN identifier, or a public VLAN identifier.

18. The method according to claim 16, wherein, under Layer 3 networking, the first service identifier is generated by semantic extension of a fixed Internet Protocol version 6 (IPv6) field, or the first service identifier is encapsulated in an extended IPv6 field.

19. The method according to claim 16, wherein: under Layer 4 networking, the first service identifier is generated by semantic expansion of a source port number field, or the first service identifier is encapsulated in a protocol payload of a user packet.

20. The method according to claim 16, wherein: the computing power status information comprises at least one of: a number of available instances for a virtual Customer Premise Equipment (vCPE), overall load data, instance load data, overall remaining session capacity, instance remaining session capacity, or an instance quality status parameter.

21. A communication device, comprising:
at least one processor; and
at least one memory configured to store a program which, when executed by the at least one processor, causes the communication device to carry out the method according to any one of claims 1 to 20.

22. A computer-readable storage medium storing a computer program which, when executed by a processor, causes the processor to carry out the method according to any one of claims 1 to 20.

23. A computer program product, comprising a computer program or a computer instruction stored in a computer-readable storage medium which, when executed by a processor of a computer device, causes the computer device to carry out the method according to any one of claims 1 to 20.
